(19) **Europäisches Patentamt**
**European Patent Office**
**Office européen des brevets**

(11) **EP 2 999 139 B1**

(12) **EUROPEAN PATENT SPECIFICATION**

(45) Date of publication and mention
of the grant of the patent:
**28.08.2019 Bulletin 2019/35**

(51) Int Cl.:
***H04B 7/26*** *(2006.01)*      ***H04J 11/00*** *(2006.01)*
***H04W 4/00*** *(2018.01)*      ***H04W 8/00*** *(2009.01)*

(21) Application number: **14797279.8**

(86) International application number:
**PCT/KR2014/004414**

(22) Date of filing: **16.05.2014**

(87) International publication number:
**WO 2014/185747 (20.11.2014 Gazette 2014/47)**

(54) **METHOD AND APPARATUS FOR TRANSMITTING AND RECEIVING SIGNALS IN WIRELESS COMMUNICATION SYSTEM**

VERFAHREN UND VORRICHTUNG ZUM SENDEN UND EMPFANGEN VON SIGNALEN IN EINEM DRAHTLOSKOMMUNIKATIONSSYSTEM

PROCÉDÉ ET APPAREIL POUR ÉMETTRE ET RECEVOIR DES SIGNAUX DANS UN SYSTÈME DE TÉLÉCOMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2013   US 201361823932 P**

(43) Date of publication of application:
**23.03.2016   Bulletin 2016/12**

(73) Proprietor: **LG Electronics Inc.**
**Seoul 07336 (KR)**

(72) Inventors:
• **CHAE, Hyukjin**
**Seoul 137-893 (KR)**

• **SEO, Hanbyul**
**Seoul 137-893 (KR)**

(74) Representative: **Cabinet Plasseraud**
**66, rue de la Chaussée d'Antin**
**75440 Paris Cedex 09 (FR)**

(56) References cited:
**EP-A1- 2 555 579         WO-A1-2012/121757**
**WO-A2-2013/025040     KR-A- 20060 128 873**
**KR-A- 20110 083 719     KR-A- 20130 041 155**
**US-A1- 2011 228 666     US-A1- 2013 114 526**

**Description**

**Field of the Invention**

The following description relates to a wireless communication system and, more particularly, to a method and apparatus for transmitting and receiving signals in Device-to-Device (D2D) communication.

**Background Art**

The wireless communication system is being extensively developed in order to provide diverse types of communication devices, such as voice or data services, and so on. Generally, a wireless communication system corresponds to a multiple access system that can support communication with multiple users by sharing an available system source (bandwidth, transmission power, and so on). Examples of the multiple access system may include a CDMA (code division multiple access) system, a FDMA (frequency division multiple access) system, a TDMA (time division multiple access) system, an OFDMA (orthogonal frequency division multiple access) system, a SC-FDMA (single carrier frequency division multiple access) system, a MC-FDMA (multi carrier frequency division multiple access) system, and so on.

Device-to-Device (D2D) communication refers to a communication method that can directly send and receive voice, data, and so on, to and from user equipments without passing through a base station (evolved NodeB; eNB) by setting up a direct link between User Equipments (UEs). D2D communication may include methods, such as user equipment-to-user equipment (UE-to-UE) communication, Peer-to-Peer communication, and so on. Additionally, the D2D communication method may also be applied to M2M (Machine-to-Machine) communication, MTC (Machine Type Communication), and so on.

D2D communication is being considered as one of many solutions for resolving the load of the base station caused by the data traffic, which is increasing at a vast rate. For example, since data can be sent and received to and from user equipments without passing through the base station, unlike in a conventional (or legacy) wireless communication system, network overload may be reduced when using D2D communication.

**Detailed Description of the Invention**

**Technical Objects**

A technical object is a method for transmitting and receiving a discovery signal in an environment in which multiple carriers are used. Examples of possible embodiments of the prior art may be found in US2013114526A1 and EP2555579A1.

The technical objects of the present invention will not be limited only to the objects described above. Accordingly, technical objects that have not been mentioned above or additional technical objects of the present application may become apparent to those having ordinary skill in the art from the description presented below.

**Technical Solutions**

A first technical aspect of the present invention corresponds to a method for transmitting and receiving signals according to claim 1.

A second technical aspect of the present invention corresponds to an apparatus according to claim 10.

The first to second technical aspects of the present invention may include the features according to claims 2 to 9.

**Effects of the Invention**

According to the present invention, a component carrier that is used for transmitting and receiving discovery signals may be decided by reflecting overall situations, such as inter-cell interference, and so on, and, even in case there are multiple components, the discovery signal search load of the device may be reduced.

The effects that may be gained from the embodiment of the present invention will not be limited only to the effects described above. Accordingly, additional effects of the present application will be set forth in part in the description which follows and in part will become apparent to those having ordinary skill in the art upon examination of the following or may be learned from practice of the present application.

**Brief Description of the Drawings**

The accompanying drawings, which are given to provide a further understanding of the present invention, illustrate diverse exemplary embodiments of the present invention and describe the principles of the present invention along with the detailed description.

Fig. 1 illustrates a structure of a radio frame (or wireless frame).
Fig. 2 illustrates a resource grid in a downlink slot.
Fig. 3 illustrates a structure of a downlink subframe.
Fig. 4 illustrates a structure of an uplink subframe.
Fig. 5 illustrates a drawing for describing carrier aggregation.
Fig. 6 illustrates a drawing for describing cross carrier scheduling.
Fig. 7 illustrates an exemplary environment in which the exemplary embodiment of the present invention can be applied.
Fig. 8 illustrates a drawing for describing the exemplary embodiment of the present invention.
Fig. 9 illustrates the structure of a transmitting and receiving (or transceiving) device.

**Mode for Carrying Out the Present Invention**

The embodiments described below are constructed by combining elements and features of the present invention in a predetermined form. The elements or features may be considered selective unless explicitly mentioned otherwise. Each of the elements or features can be implemented without being combined with other elements. In addition, some elements and/or features may be combined to configure an embodiment of the present invention. The sequence of the operations discussed in the embodiments of the present invention may be changed. Some elements or features of one embodiment may also be included in another embodiment, or may be replaced by corresponding elements or features of another embodiment.

Embodiments of the present invention will be described focusing on a data communication relationship between a base station and a terminal. The base station serves as a terminal node of a network over which the base station directly communicates with the terminal. Specific operations illustrated as being conducted by the base station in this specification may be conducted by an upper node of the base station, as necessary.

In other words, it will be obvious that various operations allowing for communication with the terminal in a network composed of several network nodes including the base station can be conducted by the base station or network nodes other than the base station. The term "base station (BS)" may be replaced with terms such as "fixed station," "Node-B," "eNode-B (eNB)," and "access point". The term "relay" may be replaced with such terms as "relay node (RN)" and "relay station (RS)". The term "terminal" may also be replaced with such terms as "user equipment (UE)," "mobile station (MS)," "mobile subscriber station (MSS)" and "subscriber station (SS)".

It should be noted that specific terms disclosed in the present invention are proposed for convenience of description and better understanding of the present invention, and these specific terms may be changed to other formats within the technical scope of the present invention.

In some cases, known structures and devices may be omitted or block diagrams illustrating only key functions of the structures and devices may be provided, so as not to obscure the concept of the present invention. The same reference numbers will be used throughout this specification to refer to the same or like parts.

Exemplary embodiments of the present invention are supported by standard documents for at least one of wireless access systems including an institute of electrical and electronics engineers (IEEE) 802 system, a 3rd generation partnership project (3GPP) system, a 3GPP long term evolution (LTE) system, an LTE-advanced (LTE-A) system, and a 3GPP2 system. In particular, steps or parts, which are not described in the embodiments of the present invention to prevent obscuring the technical scope of the present invention, may be supported by the above documents. All terms used herein may be supported by the above-mentioned documents.

The embodiments of the present invention described below can be applied to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be embodied through wireless technologies such as universal terrestrial radio access (UTRA) or CDMA2000. TDMA may be embodied through wireless technologies such as global system for mobile communication (GSM)/general packet radio service (GPRS)/enhanced data rates for GSM evolution (EDGE). OFDMA may be embodied through wireless technologies such as IEEE 802.11 (Wi-Fi), IEEE 802.16 (WiMAX), IEEE 802-20, and evolved UTRA (E-UTRA). UTRA is a part of universal mobile telecommunications system (UMTS). 3rd generation partnership project (3GPP) long term evolution (LTE) is a part of evolved UMTS (E-UMTS), which uses E-UTRA. 3GPP LTE employs OFDMA for downlink and employs SC-FDMA for uplink. LTE-Advanced (LTE-A) is an evolved version of 3GPP LTE. WiMAX can be explained by IEEE 802.16e (wirelessMAN-OFDMA reference system) and IEEE 802.16m advanced (wirelessMAN-OFDMA advanced system). For clarity, the following description focuses on 3GPP LTE and 3GPP LTE-A systems. However, the scope of the present invention is not limited thereto.

LTE/LTE-A resource structure/channel

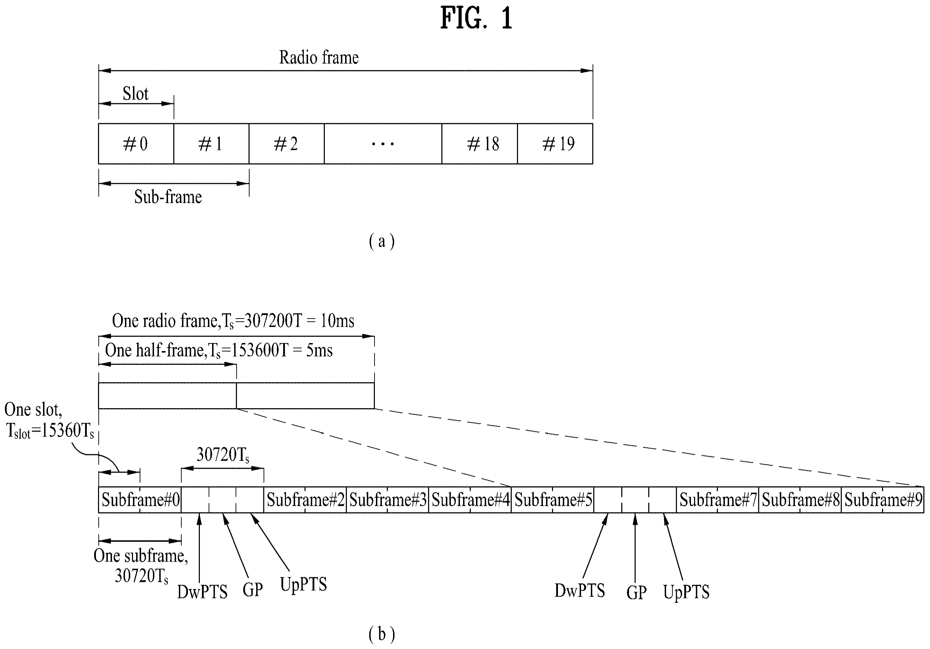

Hereinafter, a radio frame structure will be described with reference to Fig. 1.

In a cellular OFDM wireless packet communication system, an uplink (UL)/downlink (DL) data packet is transmitted on a subframe-by-subframe basis, and one subframe is defined as a predetermined time interval including a plurality of OFDM symbols. 3GPP LTE supports a type-1 radio frame structure applicable to frequency division duplex (FDD) and a type-2 radio frame structure applicable to time division duplex (TDD).

Fig. 1(a) illustrates the type-1 radio frame structure. A downlink radio frame is divided into ten subframes. Each subframe includes two slots in the time domain. The time taken to transmit one subframe is defined as a transmission time interval (TTI). For example, a subframe may have a duration of 1 ms and one slot may have a duration of 0.5 ms. A slot may include a plurality of OFDM symbols in the time domain and a plurality of resource blocks (RBs) in the frequency domain. Since 3GPP LTE employs OFDMA for downlink, an OFDM symbol represents one symbol period. An OFDM symbol may be referred to as an SC-FDMA symbol or a symbol period. A resource block (RB), which is a resource allocation unit, may include a plurality of consecutive subcarriers in a slot.

The number of OFDM symbols included in one slot depends on the configuration of a cyclic prefix (CP). CPs are divided into an extended CP and a normal CP. For a normal CP configuring each OFDM symbol, a slot may include 7 OFDM symbols. For an extended CP configuring each OFDM symbol, the duration of each OFDM symbol is extended and thus the number of OFDM symbols included in a slot is smaller than in the case of the normal CP. For the extended CP, a slot may include, for example, 6 OFDM symbols. When a channel status is unstable as in the case of high speed movement of a UE, the extended CP may be used to reduce inter-symbol interference.

When the normal CP is used, each slot includes 7 OFDM symbols, and thus each subframe includes 14 OFDM symbols. In this case, the first two or three OFDM symbols of each subframe may be allocated to a physical downlink control channel (PDCCH) and the other three OFDM symbols may be allocated to a physical downlink shared channel (PDSCH).

Fig. 1(b) illustrates the type-2 radio frame structure. The type-2 radio frame includes two half frames, each of which has 5 subframes, a downlink pilot time slot (DwPTS), a guard period (GP), and an uplink pilot time slot (UpPTS). Each subframe includes two slots. The DwPTS is used for initial cell search, synchronization, or channel estimation in a UE, whereas the UpPTS is used for channel estimation in an eNB and UL transmission synchronization in a UE. The GP is provided to eliminate interference taking place in UL due to multipath delay of a DL signal between DL and UL. Regardless of the type of a radio frame, a subframe of the radio frame includes two slots.

The illustrated radio frame structures are merely examples, and various modifications may be made to the number of subframes included in a radio frame, the number of slots included in a subframe, or the number of symbols included in a slot.

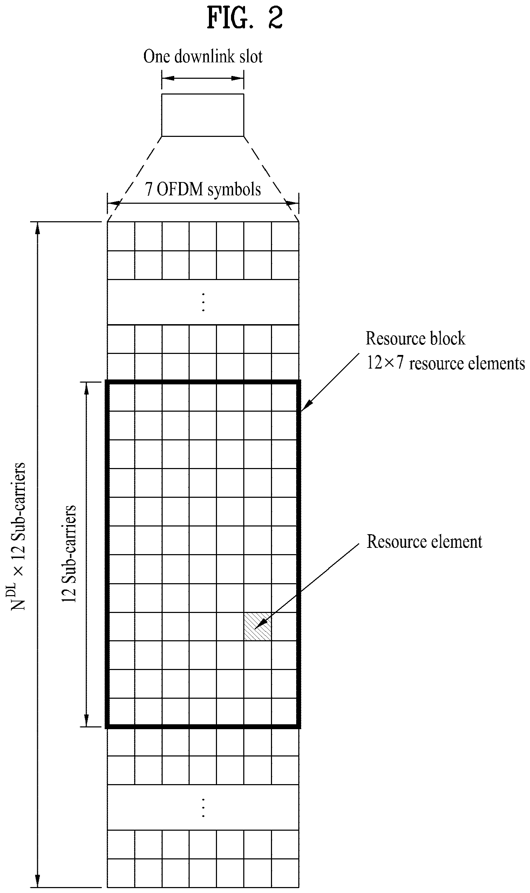

Fig. 2 is a diagram illustrating a resource grid for one DL slot. A DL slot includes 7 OFDM symbols in the time domain and an RB includes 12 subcarriers in the frequency domain. However, embodiments of the present invention are not limited thereto. For a normal CP, a slot may include 7 OFDM symbols. For an extended CP, a slot may include 6 OFDM symbols. Each element in the resource grid is referred to as a resource element (RE). An RB includes $12 \times 7$ REs. The number NDL of RBs included in a downlink slot depends on a DL transmission bandwidth. A UL slot may have the same structure as a DL slot.

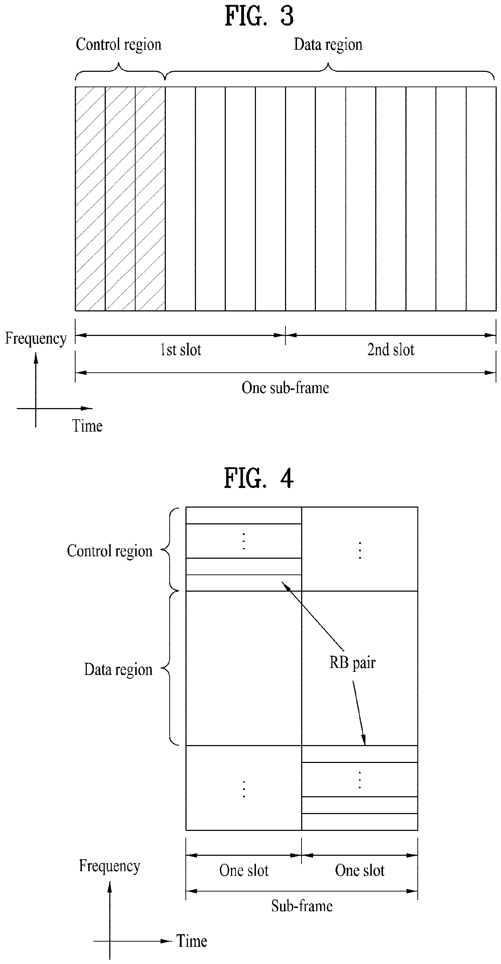

Fig. 3 illustrates a DL subframe structure. Up to the first three OFDM symbols of the first slot in a DL subframe are used as a control region to which control channels are allocated and the other OFDM symbols of the DL subframe are used as a data region to which a PDSCH is allocated. DL control channels used in 3GPP LTE include, for example, a physical control format indicator channel (PCFICH), a physical downlink control channel (PDCCH), and a physical hybrid automatic repeat request (HARQ) indicator channel (PHICH). The PCFICH is transmitted in the first OFDM symbol of a subframe, carrying information about the number of OFDM symbols used for transmission of control channels in the subframe. The PHICH carries a HARQ ACK/NACK signal in response to uplink transmission. Control information carried on the PDCCH is called downlink control information (DCI). The DCI includes UL or DL scheduling information or UL transmit power control commands for UE groups. The PDCCH delivers information about resource allocation and a transport format for a DL shared channel (DL-SCH), resource allocation information about a UL shared channel (UL-SCH), paging information of a paging channel (PCH), system information on the DL-SCH, information about resource allocation for a higher-layer control message such as a random access response transmitted on the PDSCH, a set of transmit power control commands for individual UEs of a UE group, transmit power control information, and voice over internet protocol (VoIP) activation information. A plurality of PDCCHs may be transmitted in the control region. A UE may monitor a plurality of PDCCHs. A PDCCH is formed by aggregating one or more consecutive control channel elements (CCEs). A CCE is a logical allocation unit used to provide a PDCCH at a coding rate based on the state of a radio channel. A CCE corresponds to a plurality of RE groups. The format of a PDCCH and the number of available bits for the PDCCH are determined depending on the correlation between the number of CCEs and a coding rate provided by the CCEs. An eNB determines the PDCCH format according to DCI transmitted to a UE and adds a cyclic redundancy check (CRC) to the control information. The CRC is masked by an identifier (ID) known as a radio network temporary identifier (RNTI) according to the owner or usage of the PDCCH. If the PDCCH is directed to a specific UE, its CRC may be masked by a cell-RNTI (C-RNTI) of the UE. If the PDCCH is for a paging message, the CRC of the PDCCH may be masked by a paging radio network temporary identifier (P-RNTI). If the PDCCH delivers system information, particularly, a system information block (SIB), the CRC thereof may be masked by a system information ID and a system information RNTI (SI-RNTI). To indicate that the PDCCH delivers a random access response in response to a random access preamble transmitted by a UE, the CRC thereof may be masked by a random access-RNTI (RA-RNTI).

Fig. 4 illustrates a UL subframe structure. A UL subframe may be divided into a control region and a data region in the frequency domain. A physical uplink control channel (PUCCH) carrying uplink control information is allocated to the control region and a physical uplink shared channel (PUSCH) carrying user data is allocated to the data region. To maintain single carrier property, a UE does not simultaneously transmit a PUSCH and a PUCCH. A PUCCH for a UE is allocated to an RB pair in a subframe. The RBs of the RB pair occupy different subcarriers in two slots. This is often called frequency hopping of the RB pair allocated to the PUCCH over a slot boundary.

## Carrier aggregation

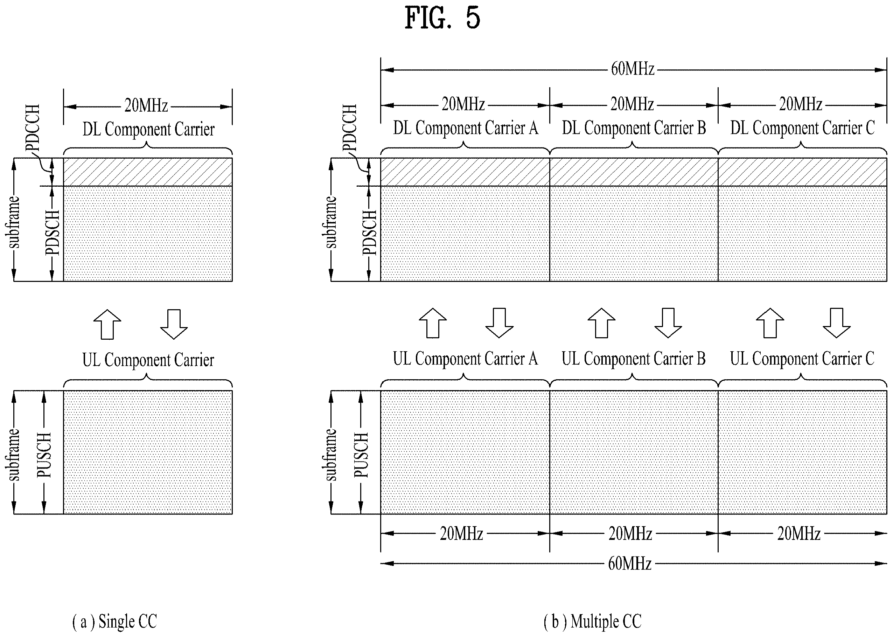

Fig. 5 illustrates a drawing for describing carrier aggregation. Prior to describing carrier aggregation, the concept of a cell being adopted for managing radio resources in the LTE-A will hereinafter be described firsthand. A cell may be understood as a combination of a downlink resource and an uplink resource. Herein, the uplink resource does not correspond to an essential element, and, therefore, a cell may be configured only of a downlink resource or may be configured of both the downlink resource and the uplink resource. However, this is a definition established in the current LTE-A release 10. And, an opposite case may also be realized, *i.e.,* a cell may be configured only of the uplink resource. The downlink resource may be referred to as a Downlink component carrier (DL CC), and the uplink resource may be referred to as an Uplink component carrier (UL CC). The DL CC and the UL CC may be expressed as carrier frequency, and the carrier frequency signifies a center frequency within the corresponding cell.

A cell may be divided into a primary cell (PCell), which operates in a primary frequency, and a secondary cell (SCell), which operates in a secondary frequency. The PCell and the SCell may be collectively referred to as a serving cell. In case of the PCell, a cell being designated when the user equipment performs an initial connection establishment procedure or during a connection re-establishment procedure or a handover procedure, may become the PCell. More specifically, the PCell may be understood as a cell that becomes a control-related center in carrier aggregation environment, which will be described in detail later on. The user equipment may be assigned (or allocated) with the PUCCH from its own PCell and may then transmit the allocated PUCCH. The SCell may be configured after RRC (Radio Resource Control) connection establishment, and the SCell may be used for providing additional radio resource. In the carrier aggregation environment, all serving cells excluding the PCell may be viewed as the SCell. In case of a user equipment that is in an RRC_CONNECTED state, yet in case carrier aggregation is not set up or is case the user equipment does not support carrier aggregation, only a single serving cell consisting only of PCells exist. Conversely, in case of a user equipment that is in the RRC _CONNECTED state and that is set up with carrier aggregation, at least one or more serving cells exist, and PCells and all SCells are included in all serving cells. For a user equipment supporting carrier aggregation, after an initial security activation procedure is initiated, the network may configure at least one or more SCells in additional to the PCell, which is configured at the beginning of the connection establishment procedure.

Hereinafter, carrier aggregation will be described with reference to Fig. 5. Carrier aggregation corresponds to a technology that has been adopted to allow the usage of a broader (or wider) band in order to meet with the requirements of a high-speed transmission rate. Carrier aggregation may be defined as an aggregation of at least 2 or more component carriers (CCs), each having a different frequency. Referring to Fig. 5, Fig. 5(a) illustrates a subframe in a case when one CC is used in the conventional LTE system, and Fig. 5(b) illustrates a subframe in a case when carrier aggregation is being used. For example, it is illustrates in Fig. 5(b) that 3 CCs of 20MHz are used, thereby supporting a bandwidth of a total of 60MHz. Herein, each CC may be continuous or may be non-continuous (or discontinuous).

The user equipment may simultaneously receive and monitor downlink data from a plurality of DL CCs. A linkage between each DL CC and UL CC may be designated by the system information. The DL CC/UL CC link may be fixed to the system or may be semi-statically configured. Additionally, even if the entire system band is configured of N number of CCs, the frequency band through which a specific user equipment may perform monitoring/reception may be limited M(<N) number of CCs. Diverse parameters respective to carrier aggregation may be set up by a cell-specific method, a UE group-specific or UE-specific method.

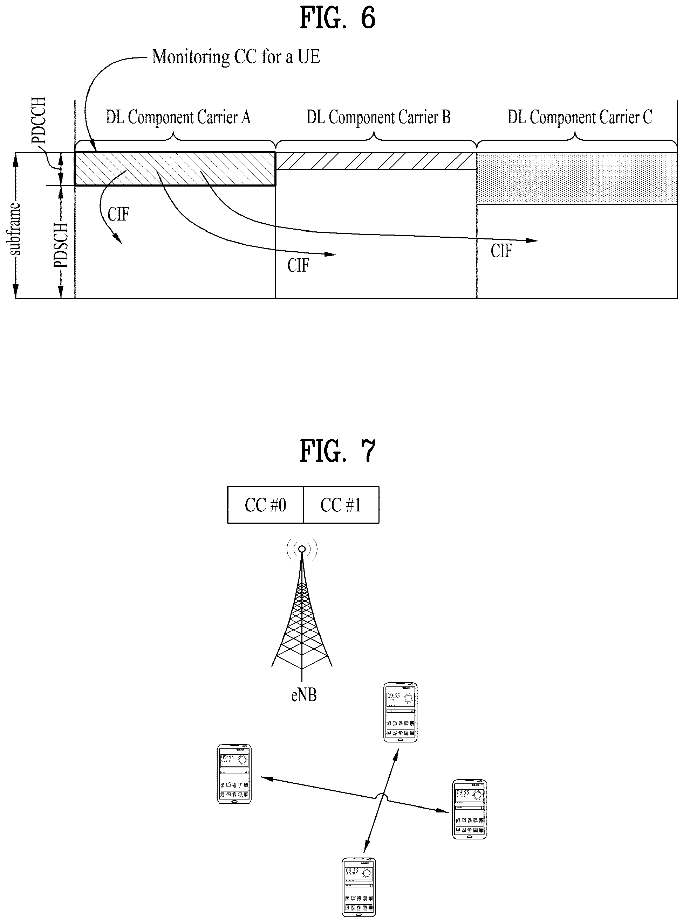

Fig. 6 illustrates a drawing for describing cross carrier scheduling. Cross-carrier scheduling, for example, refers to all downlink scheduling allocation information of another DL CC being included in the control region of any one DL CC, among multiple serving cells, or all uplink scheduling authorization (or certification) information respective to multiple UL CCs linked to any one DL CC being included in the control region of the one DL CC, among multiple serving cells.

First of all, a carrier indicator field (CIF) will be described in detail.

As described above, the CIF may either be included or not included in the DCI format, which is being transmitted through the PDCCH. And, in case the CIF is included in the DCI format, this indicates that cross-carrier scheduling is applied. In case cross-carrier scheduling is not applied, the downlink scheduling allocation information is valid within the DL CC through which current downlink scheduling allocation information is being transmitted. Additionally, the uplink scheduling authorization is valid for a UL CC, which is linked to the DL CC through which the downlink scheduling allocation information is being transmitted.

In case cross-carrier scheduling is being applied, the CIF indicates a CC related to the downlink scheduling allocation information, which is transmitted through the PDCCH from any one DL CC. For example, referring to Fig. 6, downlink allocation information, *i.e.,* information on PDSCH resource, respective to DL CC B and DL CC C is transmitted through the PDCCH within the control region of DL CC A. The user equipment may monitor DL CC A, so as to figure out the resource area of the PDSCH and the corresponding CC through the CIF.

Whether the CIF is included or not included in the PDCCH may be semi-statically set up, and the CIF may be UE-specifically activated (or enabled) by higher-layer signaling. In case the CIF is disabled, the PDCCH of a specific DL CC allocates PDSCH resource of the same DL CC and may also allocate PUSCH resource of a UL CC, which is linked to the specific DL CC. In this case, the same coding method, CCE based resource mapping, DCI format, and so on, as the conventional PDCCH structure may be applied.

Meanwhile, in case the CIF is enabled, the PDCCH of a specific DL CC may allocate PDSCH/PUSCH resource within a single DL/UL CC being indicated by the CIF, among the multiple aggregated CCs. In this case, a CIF may be additionally defined in the conventional PDCCH DCI format, and the CIF may be defined as a field having a fixed length of 3 bits, or the CIF position may be fixed regardless of the DCI format size. In this case also, the same coding method, CCE based resource mapping, DCI format, and so on, as the conventional PDCCH structure may be applied.

In case the CIF exists, the base station may allocation a DL CC set, which is intended to monitor the PDCCH. Accordingly, the burden of blind decoding of the UE may be decreased. The PDCCH monitoring CC set corresponds to a portion of the entire aggregated DL CC, and the user equipment may perform PDCCH detection/decoding only in the corresponding CC set. More specifically, in order to perform PDSCH/PUSCH scheduling with respect to the user equipment, the base station may transmit the PDCCH only over the PDCCH monitoring CC set. The PDCCH monitoring CC set may be UE-specifically or UE group-specifically or cell-specifically set up. For example, as shown in the example of Fig. 6, when 3 DL CCs are aggregated, DL CC A may be set up as the PDCCH monitoring DL CC. In case the CIF is disabled, the PDCCH of each DL CC may schedule only the PDSCH within the DL CC A. Meanwhile, when the CIF is enabled, in addition to the DL CC A, the PDCCH of DL CC A may also schedule the PDSCH of other DL CCs. In case the DL CC A is set up as the PDCCH monitoring CC, the PDSCCH is not transmitted to DL CC B and the DL CC C.

In a system having the above-described carrier aggregation applied thereto, the user equipment may receive multiple PDSCH through multiple downlink carriers. And, in this case, there may occur a case when the user equipment is required to transmit ACK/NACK respective to each data set from one UL CC within a single subframe. When multiple ACK/NACKs are being transmitted from a single subframe by using PUCCH format 1a/1b, a high transmission power is required, PAPR of an uplink transmission is increased, and, due to an inefficient usage of a transmission power amplifier, the available transmission distance of the user equipment from the base station may be decreased. In order to transmit multiple ACK/NACKs through a single PUCCH, ACK/NACK bundling or ACK/NACK multiplexing may be applied.

Additionally, there may occur a case when ACK/NACK information respective to a large number of downlink data sets according to the application of carrier aggregation and/or ACK/NACK information respective to a large number of downlink data sets being transmitted from a plurality of DL subframes in a TDD system is required to be transmitted through the PUCCH in a single subframe. In such case, if the number if ACK/NACK bits that are to be transmitted is larger than the number of bits available for support through ACK/NACK bundling or multiplexing, the ACK/NACK information may not be correctly transmitted by using the above-described methods.

Hereinafter, based upon the description presented above, the transmission and reception of a discovery signal of a D2D device in a wireless communication system where carrier aggregation is used will be described. Fig. 7 illustrates an example of a wireless communication system in which the present invention can be applied. As shown in Fig. 7, in case a operator has multiple component carriers, each of the devices (or apparatuses) may communicate with the base station through different component carriers, or each of the devices may recognize (or identify) different component carriers as the PCell. In this case, in order to allow the device to discover the base station or another device, the device shall transmit and receive a discovery signal within a shared (or common) component carrier. If the component carrier that transmits and receive the discovery signal is not shared by the corresponding devices, since the device that intends to receive the discovery is required to attempt to perform discovery detection within all of the component carriers, this may lead to a significant loss, such as discovery delay, power consumption, and so on.

**Deciding a component carrier in which a discovery signal is transmitted**

The device that intends to receive the discovery signal decides (or determined) a component carrier in which the discovery signal is to be transmitted among two or more component carrier, and, then, the device may search (or detect) the discovery signal within the decided (or determined) component carrier. At this point, the component carrier in which the discovery signal is transmitted may be decided (or determined) on the basis of one among a frequency band of the component carrier, a device ID, a measurement result and a service type.

The component carrier in which the discovery signal is transmitted may be decided as a component carrier having a lowest carrier frequency among the two or more component carriers. In the same context, the component carrier in which the discovery signal is transmitted may be decided as a component carrier having little propagation loss. In this case, a broad (or wide) coverage may be ensured in transmitting and receiving the discovery signal. Such component carrier is very likely to correspond to a component carrier that is mostly used by a macro base station.

The component carrier in which the discovery signal is transmitted may be decided by a device ID. As a detailed example, the component carrier may be decided by an ID of the transmission device, an ID of the reception device, an ID that is newly generated by using the ID of the transmission device and the ID of the reception device, or a service ID. If an index of the component carrier in which the discovery signal is transmitted corresponds to i-1, i=(UE ID)mod(number of CC), and the UE ID may correspond to an ID of the transmission device, an ID of the reception device, an ID that is newly generated by using the ID of the transmission device and the ID of the reception device (e.g., a sum of an ID of a device transmitting a discovery signal and an ID of a device receiving a discovery signal), or a service ID, and wherein the number of CCs may correspond to a number of component carriers. By using this configuration, in an intra-band CA environment, wherein component carriers having similar pathloss are being used in the CA, the effect of having the transmission and reception of the discovery signal be concentrated only to a specific component carrier may be prevented. The method of determining (or deciding) the component carrier in which the discovery signal is transmitted in accordance with the ID may also be understood as ICIC (Inter-Cell Interference Coordination) based upon the carrier of the discovery signal.

As an example of the above-described method of determining the component carrier in which the discovery signal is transmitted, priority levels may be assigned in proportion to a discovery capacity or a system bandwidth for each component carrier. More specifically, a value that is given weight after reflecting the discovery capacity for each component carrier to a result value, which is obtained by hashing the device ID, may be used as a decision metric. For example, in a system having N number of UEs and 2 component carriers, in case the component carrier in which the discovery signal is transmitted and received is decided by using the transmission device ID, the UE ID is divided by 10, and the UE having a remainder that is equal to or greater than X may transmit and receive a discovery signal through Component Carrier #0, and the UE having a remainder that is less than or equal to X may transmit and receive a discovery signal through Component Carrier #1. By doing so, the problem of having a number of devices being equally distributed to component carriers having different discovery capacity for each component carrier may be supplemented.

As yet another example of deciding (or determining) the component carrier in which the discovery signal is transmitted, the component carrier for the discovery signal may be decided based upon the measurement result. According to the measurement result (or a distance between a device and another device/base station), a component carrier that is being used by a base station currently having the strongest signal or a component carrier that is being used in a base station-to-device communication with a short range may be excluded from the component carrier for discovery. Alternatively, based upon an inter-band measurement, a component carrier having the weakest signal may be decided as the component carrier in which the discovery signal is transmitted. More specifically, the component carrier in which the discovery signal is transmitted may be decided by Equation 1 shown below.

Equation 1

$$i^* = \arg\min\left(RSRP_i - \alpha_i\right)$$

Herein, i* corresponds to a component carrier index in which the discovery signal is transmitted, and
$\alpha_i$
corresponds to a bias value that is being applied to a reference signal intensity (or strength) within the component carrier i, wherein the bias value may correspond to a pre-decided value or a value predetermined by the base station or a value that is signaled by the base station to the user equipment as a physical layer or higher layer signal. The bias value that is determined in advance by the base station in order to expand the coverage may be set up differently from the above-described bias value.

The component carrier in which the discovery signal is transmitted may correspond to one of the component carriers that are being varied by hopping. Herein, the hopping may correspond to hopping that is performed simultaneously in multiple component carriers or hopping that is performed for each component carrier, and the hopping pattern may be determined in accordance with the device ID or may be predetermined. The discovery signal reception device may search for a discovery signal only in its own serving cell, or the discovery signal reception device may search for a discovery signal in another specific component carrier other than the serving cell, or in a subset of all component carriers, or in all of the component carriers. At this point, in case the discovery signal is transmitted from or received in an unknown component carrier (unknown CC), a predetermined value that is decided in advance for a number of times the discovery signal is transmitted, or a number of times the discovery signal is being searched (a number of blind decoding sessions), may be reduced to low. (Restriction (or limitation) in the number of total discovery signals searched or restriction in the number of blind decoding sessions or restriction in the number of discovery signals being transmitted in one component carrier.) This is to minimize the power consumption in D2D discovery, or to satisfy a delay respective to a discovery signal search to a predetermined level.

As yet another example, the component carrier in which the discovery signal is transmitted may be determined in accordance with the service type, and, in order to do so, each of the service types may be mapped to a component carrier in which a discovery signal is transmitted. For example, in case the service type corresponds to public safety, the component carrier in which the discovery signal is transmitted may correspond to a component carrier that is used by a macro cell. Alternatively, in case the service type corresponds to file transmission, the component carrier may correspond to a component carrier respective to a high (highest) frequency band.

As yet another example, the discovery signal may be transmitted and received in and from a Pcell which the device has already been communicating with. This is because, after the discovery procedure, the Pcell is adequate for transmitting and receiving diverse types of control signals. In order to perform transmission and reception of the discovery signals between devices using different component carriers as the Pcell, before receiving the discovery signal, information on a discovery signal pool shall first be determined (or recognized) in advance through a SIB, which is transmitted from the Pcell of the corresponding device, and, then, the discovery signal may be received from a region that is indicated by the received SIB.

In case the operators between the devices transmitting and receiving discovery signals are different from one another, negotiation between the operators may be required. In this case, in case the D2D discovery transmission and reception is concentrated to the carrier of a specific operator, the D2D discovery performance of the corresponding operator is inevitably degraded. Accordingly, in case the operators are different, a number of devices corresponding to a predetermined capacity (this may correspond to a value that is decided by a negotiation between the operators, for example, the value may be decided to be proportional to the number of subscribers, or the value may be decided based upon the statistics of D2D communication during a predetermined period of time) should perform discovery signal transmission and reception from a component carrier of the corresponding operator. In this case, the above-described method may be used, or the component carrier of the operator of the UE transmitting or receiving the DS may be configured (or set up) as the DS transmission and reception CC.

In case each operator has multiple component carriers, the component carrier transmitting and receiving the discovery signal for each operator may be determined in advance. And, at this point, the component carrier transmitting the discovery signal for each operator may be signaled in advance through a physical layer signal (e.g., SIB). At this point, in case user equipments of different operators attempt to discover one another, each user equipment first decodes the physical layer signal of the counterpart operator, and, then, each of the user equipments may find out (or determine) which component carrier is transmitting the discovery signal.

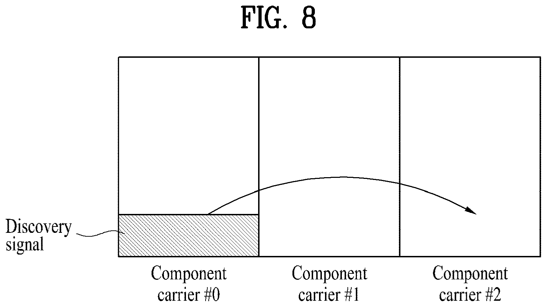

Information indicating the component carrier (e.g., carrier indication field, and so on) may be included in a discovery signal that is transmitted from a component carrier, which is determined through any one of the methods among the description presented above. Herein, the component carrier that is being indicated by the information indicating the component carrier may correspond to any one of a component carrier for D2D communication, a component carrier that is being used by the device transmitting the discovery signal for performing communication with the base station, a component carrier that is to be avoided for usage in D2D communication due to the generation of a high interference. For example, referring to Fig. 8, in case a discovery signal is transmitted from Component Carrier #0 (component carrier #0) (the time-frequency resource in which the discovery channel is transmitted is exemplary), the discovery reception device may recognize Component Carrier #2 (component carrier #0), which is indicated by the discovery signal, as a D2D communication component carrier.

The description presented above will not be limited only to discovery, and, in case the operator owns multiple component carriers when transmitting a different type of D2D signal, the same principle may be applied.

## Communication after transmitting and receiving a discovery signal

Communication may be performed through a component carrier, which is indicated by information indicating a component carrier, and, in this case, the component carrier may be used as a Pcell in the communication. More specifically, the component carrier may be used as a D2D Pcell.

Alternatively, regardless of the information indicating a component carrier, a component carrier that is being indicated through a physical layer signal or via higher layer signaling may become the Pcell in the D2D communication. Alternatively, a component carrier in which a discovery signal is successfully transmitted and received may also be implicitly decided as the Pcell in D2D communication.

Herein, the D2D Pcell may be the same as or different from the Pcell of a cellular network, and the D2D Pcells may each be interpreted differently for each device. The main purpose of usage of the D2D Pcell is to transmit and receive D2D A/N and to designate a control channel transmitting and receiving the CC. In case the D2D devices perform D2D communication by using multiple CCs, designation may be made such as D2D Pcell, D2D scell1, D2D scell2.

**Device configuration according to the exemplary embodiment of the present invention**

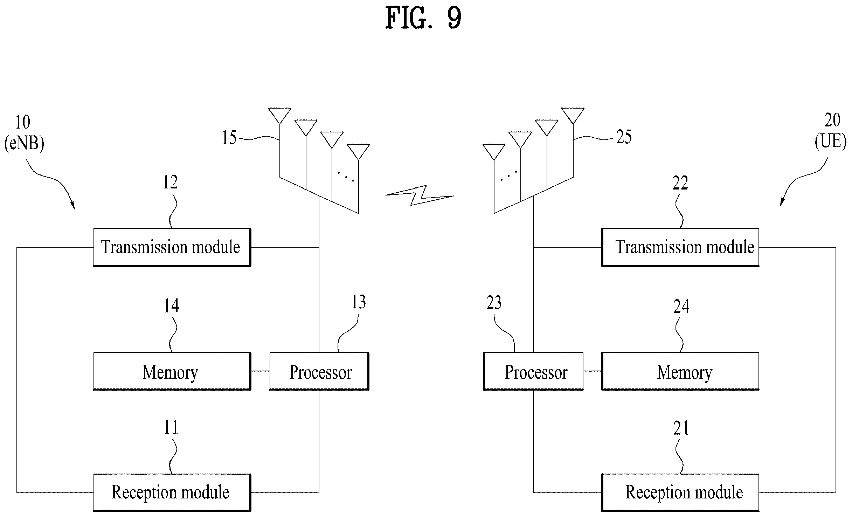

Fig. 9 illustrates configurations of a transmission point device and a user equipment device according to an exemplary embodiment of the present invention.

Referring to Fig. 9, the transmission point device (10) according to the present invention may include a reception module (11), a transmission module (12), a processor (13), a memory (14), and multiple antennae (15). The multiple antennae (15) indicate that the transmission point device supports MIMO transmission/reception (or transception). The reception module (11) may receive diverse signals, data, and information within an uplink from the user equipment. The transmission module (12) may transmit diverse signals, data, and information within a downlink to the user equipment. The processor (13) may control the overall operations of the transmission point device (10).

The processor (13) of the transmission point device (10) according to an exemplary embodiment of the present invention may process the details that are required in each of the exemplary embodiments, which are described above.

Moreover, in addition to the above-described functions, the processor (13) of the transmission point device (10) may perform functions of performing calculation operations of information received by the transmission point device (10), information that is to be transmitted to an external target, and so on. And, the memory (14) may store the calculated information for a predetermined period of time, and the memory (14) may also be replaced with another element, such as a buffer (not shown).

Additionally, referring to Fig. 9, the user equipment device (20) according to the present invention may include a reception module (21), a transmission module (22), a processor (23), a memory (24), and multiple antennae (25). The multiple antennae (25) indicate that the user equipment device supports MIMO transmission/reception (or transception). The reception module (21) may receive diverse signals, data, and information within a downlink from the base station. The transmission module (22) may transmit diverse signals, data, and information within an uplink to the base station. The processor (23) may control the overall operations of the user equipment device (20).

The processor (23) of the user equipment device (20) according to an exemplary embodiment of the present invention may process the details that are required in each of the exemplary embodiments, which are described above.

In addition to the above-described functions, the processor (23) of the user equipment device (20) may perform functions of performing calculation operations of information received by the user equipment device (20), information that is to be transmitted to an external target, and so on. And, the memory (24) may store the calculated information for a predetermined period of time, and the memory (24) may also be replaced with another element, such as a buffer (not shown).

The detailed structure of the transmission point device and the user equipment device, as described above, may be implemented by independently applying the detailed described in diverse exemplary embodiments of the present invention or may be implemented by simultaneously applying 2 or more exemplary embodiments of the present invention. And, for clarity in the description, overlapping contents will be omitted.

Additionally, in the description on Fig. 9, the description on the transmission point device (10) may also be equally applied to a relay device operating as a downlink transmitting subject or an uplink receiving subject, and the description on the user equipment device (20) may also be equally applied to a relay device operating as a downlink receiving subject or an uplink transmitting subject.

The above-described embodiments of the present invention may be implemented by using a variety of methods. For example, the embodiments of the present invention may be implemented in the form of hardware, firmware, or software, or in a combination of hardware, firmware, and/or software.

In case of implementing the embodiments of the present invention in the form of hardware, the method according to the embodiments of the present invention may be implemented by using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro controllers, micro processors, and so on.

In case of implementing the embodiments of the present invention in the form of firmware or software, the method according to the embodiments of the present invention may be implemented in the form of a module, procedure, or function performing the above-described functions or operations. A software code may be stored in a memory unit and driven by a processor. Herein, the memory unit may be located inside or outside of the processor, and the memory unit may transmit and receive data to and from the processor by using a wide range of methods that have already been disclosed.

The detailed description of the preferred embodiments of the present invention disclosed herein as described above is provided so that those skilled in the art can easily implement and realize the present invention. Although the embodiment of the present invention has been described with reference to the accompanying drawings, the described embodiment of the present invention is merely exemplary. Therefore, it will be apparent to those skilled in the art that various modifications and variations can be made in the present invention without departing from the scope of the inventions. For example, anyone skilled in the art may combine each component disclosed in the description of the embodiments of the present invention. Therefore, it is intended that the present invention covers the modifications and variations of this invention provided they come within the scope of the appended claims, and it is not intended to limit the present invention only to the examples presented herein.

Furthermore, the present invention may be realized in another concrete configuration (or formation) without deviating from the scope of the essential characteristics of the present invention. Therefore, in all aspect, the detailed description of present invention is intended to be understood and interpreted as an exemplary embodiment of the present invention without limitation. The scope of the present invention shall be decided based upon a reasonable interpretation of the appended claims of the present invention and shall come within the scope of the appended claims. Therefore, it is intended that the present invention covers the modifications and variations of this invention provided they come within the scope of the appended claims, and it is not intended to limit the present invention only to the examples presented herein.

**Industrial Applicability**

The above-described exemplary embodiments according to the present invention may be applied to diverse mobile communication systems.

**Claims**

1. A method for transmitting and receiving signals between a first device-to-device, D2D, and a second D2D device in a wireless communication system comprising two or more component carriers, the method comprising:

    determining, by the first device, a component carrier among the two or more component carriers;
    transmitting, by the first device, a first discovery signal on the determined component carrier; and
    detecting and receiving, by the first device, a second discovery signal on the determined component carrier from the second device;
    wherein the determining is based on one of a frequency band of the two or more component carriers, a device ID, a measurement result and a service type, and
    wherein the first discovery signal includes information for a carrier component, wherein the information for the carrier component is related to one of a component carrier for D2D communication, a component carrier that is used by a device transmitting the discovery signal for performing communication with a base station, and a component carrier that is to be avoided for usage in D2D communication.

2. The method of claim 1, further comprising wherein the first information for the carrier component is related to a component carrier for D2D communication:
    performing communication with the second device on the component carrier based on the information for the carrier component.

3. The method of claim 2, wherein the component carrier is used as a Primary Cell, PCell, in the communication based on the information for the carrier component.

4. The method of claim 1, wherein the determined component carrier is the one having a lowest carrier frequency among the two or more component carriers.

5. The method of claim 1, wherein an index of the determined component carrier corresponds to i-1, wherein i=(UE ID)mod(number of CC), wherein the UE ID corresponds to an ID of the first device t and wherein the number of CCs corresponds to a number of the component carriers.

6. The method of claim 1, wherein the determined component carrier is a component carrier having a lowest measurement result signal strength among the two or more component carriers.

7. The method of claim 1, wherein the determined component carrier is determined by the following equation:

$$i^* = \arg\min\left(RSRP_i - \alpha_i\right)$$

wherein i* corresponds to a component carrier index in which the discovery signal is transmitted, and wherein $\alpha_i$ corresponds to a predetermined value for a reference signal strength within the component carrier i.

8. The method of claim 1, wherein each type of service is mapped to the determined component carrier.

9. The method of claim +1, wherein, in case a type of the service is public safety, the determined component carrier is determined as a component carrier that is being used in a macro cell.

10. As an apparatus (20) for performing Device to Device, D2D, communication in a wireless communication system comprising two or more component carriers, the apparatus comprises:

a reception module (21);
a transmission module (22); and
a processor (23),
wherein the processor is configured to determine a component carrier among the two or more component carriers
wherein the transmission module is configure to transmit a first discovery signal on the determined component carrier,
wherein the processor is further configured to detect a second discovery signal on the determined component carrier,
wherein the determined component carrier is based on one of a frequency band of the two or more component carriers, a device ID, a measurement result and a service type,
wherein the first discovery signal includes information for a carrier component, wherein the information for the carrier component is related to one of a component carrier for D2D communication, a component carrier that is used by a device transmitting the discovery signal for performing communication with a base station, and a component carrier that is to be avoided for usage in D2D communication.

**Patentansprüche**

1. Verfahren zum Senden und Empfangen von Signalen zwischen einer ersten Vorrichtung-zu-Vorrichtung-, D2D-, und einer zweiten D2D-Vorrichtung in einem drahtlosen Kommunikationssystem, das zwei oder mehr Komponententräger aufweist, wobei das Verfahren aufweist:

Bestimmen eines Komponententrägers unter den zwei oder mehr Komponententrägern durch die erste Vorrichtung; und
Senden eines ersten Auffindungssignals auf dem bestimmten Komponententräger durch die erste Vorrichtung; und
Erfassen und Empfangen eines zweiten Auffindungssignals auf dem bestimmten Komponententräger von der zweiten Vorrichtung durch die erste Vorrichtung;
wobei die Bestimmung auf einem von einem Frequenzband der zwei oder mehr Komponententräger, einer Vorrichtungs-ID, einem Messergebnis und einem Diensttyp basiert, und
wobei das erste Auffindungssignal Informationen für eine Trägerkomponente aufweist, wobei die Informationen für die Trägerkomponente einen von einem Komponententräger für die D2D-Kommunikation, einem Komponententräger, der durch eine Vorrichtung verwendet wird, die das Auffindungssignal zum Durchführen der Kommunikation mit einer Basisstation sendet, und einem Komponententräger, der für die Verwendung in der D2D-Kommunikation vermieden werden soll, betreffen.

2. Verfahren nach Anspruch 1, das ferner aufweist, wobei die ersten Informationen für die Trägerkomponente einen Komponententräger für die D2D-Kommunikation betreffen:

Durchführen einer Kommunikation mit der zweiten Vorrichtung auf dem Komponententräger basierend auf den Informationen für die Trägerkomponente.

3. Verfahren nach Anspruch 2, wobei der Komponententräger in der Kommunikation basierend auf den Informationen für die Trägerkomponente als eine Primärzelle, PCell, verwendet wird.

4. Verfahren nach Anspruch 1, wobei der bestimmte Komponententräger der mit einer niedrigsten Trägerfrequenz unter den zwei oder mehr Komponententrägern ist.

5. Verfahren nach Anspruch 1, wobei ein Index des bestimmten Komponententrägers i-1 entspricht, wobei i = (UE ID)mod(Anzahl von CC), wobei UE ID einer ID der ersten Vorrichtung t entspricht und wobei die Anzahl von CCs einer Anzahl der Komponententräger entspricht.

6. Verfahren nach Anspruch 1, wobei der bestimmte Komponententräger ein Komponententräger mit einer niedrigsten Messergebnissignalstärke unter den zwei oder mehr Komponententrägern ist.

7. Verfahren nach Anspruch 1, wobei der bestimmte Komponententräger durch die folgende Gleichung bestimmt wird:

$$i^* = \arg\min(RSRP_i - \alpha_i),$$

wobei $i^*$ einem Komponententrägerindex entspricht, bei dem das Auffindungssignal gesendet wird, und wobei $\alpha_i$ einem vorgegebenen Wert für eine Referenzsignalstärke innerhalb des Komponententrägers i entspricht.

8. Verfahren nach Anspruch 1, wobei jeder Diensttyp auf den bestimmten Komponententräger abgebildet wird.

9. Verfahren nach Anspruch 1, wobei der bestimmte Komponententräger, falls ein Diensttyp öffentliche Sicherheit ist, als ein Komponententräger bestimmt wird, der in einer Makrozelle verwendet wird.

10. Vorrichtung (20) zum Durchführen einer Vorrichtung-zu-Vorrichtung-, D2D-, Kommunikation in einem drahtlosen Kommunikationssystem, das zwei oder mehr Komponententräger aufweist, wobei die Vorrichtung aufweist:

ein Empfangsmodul (21);
ein Sendemodul (22); und
einen Prozessor (23),
wobei der Prozessor konfiguriert ist, um einen Komponententräger unter den zwei oder mehr Komponententrägern zu bestimmen,
wobei das Sendemodul konfiguriert ist, um ein erstes Auffindungssignal auf dem bestimmten Komponententräger zu senden,
wobei der Prozessor ferner konfiguriert ist, um ein zweites Auffindungssignal auf dem bestimmten Komponententräger zu erfassen,
wobei der bestimmte Komponententräger auf einem von einem Frequenzband der zwei oder mehr Komponententräger, einer Vorrichtungs-ID, einem Messergebnis oder einem Diensttyp basiert,
wobei das erste Auffindungssignal Informationen für eine Trägerkomponente aufweist, wobei die Informationen für die Trägerkomponente einen von einem Komponententräger für die D2D-Kommunikation, einem Komponententräger, der durch eine Vorrichtung verwendet wird, die das Auffindungssignal zum Durchführen der Kommunikation mit einer Basisstation sendet, und einem Komponententräger, der für die Verwendung in der D2D-Kommunikation vermieden werden soll, betreffen.

**Revendications**

1. Procédé pour émettre et recevoir des signaux entre un premier dispositif de dispositif à dispositif, D2D, et un deuxième dispositif D2D dans un système de communication sans fil comprenant deux porteuses composantes ou plus, le procédé comprenant :

la détermination, par le premier dispositif, d'une porteuse composante parmi les deux porteuses composantes ou plus ;
l'émission, par le premier dispositif, d'un premier signal de découverte sur la porteuse composante déterminée ;

et

la détection et la réception, par le premier dispositif, d'un deuxième signal de découverte sur la porteuse composante déterminée en provenance du deuxième dispositif ;

dans lequel la détermination est basée sur l'un parmi une bande de fréquences des deux porteuses composantes ou plus, un ID de dispositif, un résultat de mesure et un type de service, et

dans lequel le premier signal de découverte inclut des informations pour une porteuse composante, dans lequel les informations pour la porteuse composante sont relatives à l'une parmi une porteuse composante pour une communication D2D, une porteuse composante qui est utilisée par un dispositif émettant le signal de découverte pour réaliser une communication avec une station de base, et une porteuse composante qui doit être évitée pour utilisation dans une communication D2D.

2.  Procédé selon la revendication 1, dans lequel les premières informations pour la porteuse composante sont relatives à une porteuse composante pour une communication D2D, comprenant en outre :
la réalisation d'une communication avec le deuxième dispositif sur la porteuse composante sur la base des informations pour la porteuse composante.

3.  Procédé selon la revendication 2, dans lequel la porteuse composante est utilisée en tant que cellule primaire, PCell, dans la communication basée sur les informations pour la porteuse composante.

4.  Procédé selon la revendication 1, dans lequel la porteuse composante déterminée est celle ayant une fréquence de porteuse la plus basse parmi les deux porteuses composantes ou plus.

5.  Procédé selon la revendication 1, dans lequel un indice de la porteuse composante déterminée correspond à i-1, dans lequel i = (UE ID)mod(nombre de CC), dans lequel UE ID correspond à un ID du premier dispositif t et dans lequel le nombre de CC correspond à un nombre de porteuses composantes.

6.  Procédé selon la revendication 1, dans lequel la porteuse composante déterminée est une porteuse composante ayant une intensité de signal de résultat de mesure la plus basse parmi les deux porteuses composantes ou plus.

7.  Procédé selon la revendication 1, dans lequel la porteuse composante déterminée est déterminée par l'équation suivante :

$$i^* = \arg\min(RSRP_i - \alpha_i)$$

dans lequel $i^*$ correspond à un indice de porteuse composante dans lequel le signal de découverte est émis, et dans lequel $\alpha_i$ correspond à une valeur prédéterminée pour une intensité de signal de référence à l'intérieur de la porteuse composante i.

8.  Procédé selon la revendication 1, dans lequel chaque type de service est mis en correspondance avec la porteuse composante déterminée.

9.  Procédé selon la revendication 1, dans lequel, dans un cas où un type du service est une sécurité publique, la porteuse composante déterminée est déterminée en tant que porteuse composante qui est utilisée dans une macrocellule.

10. Appareil (20) pour réaliser une communication de dispositif à dispositif, D2D, dans un système de communication sans fil comprenant deux porteuses composantes ou plus, l'appareil comprend :

un module de réception (21) ;
un module d'émission (22) ; et
un processeur (23),
dans lequel le processeur est configuré pour déterminer une porteuse composante parmi les deux porteuses composantes ou plus,
dans lequel le module d'émission est configuré pour émettre un premier signal de découverte sur la porteuse composante déterminée,
dans lequel le processeur est en outre configuré pour détecter un deuxième signal de découverte sur la porteuse composante déterminée,
dans lequel la porteuse composante déterminée est basée sur l'un parmi une bande de fréquences des deux porteuses composantes ou plus, un ID de dispositif, un résultat de mesure et un type de service,
dans lequel le premier signal de découverte inclut des informations pour une porteuse composante, dans lequel les informations pour la porteuse composante sont relatives à l'une parmi une porteuse composante pour une communication D2D, une porteuse composante qui est utilisée par un dispositif émettant le signal de découverte pour réaliser une communication avec une station de base, et une porteuse composante qui doit être évitée pour utilisation dans une communication D2D.

# FIG. 1

Radio frame

Slot

| #0 | #1 | #2 | ··· | #18 | #19 |

Sub-frame

(a)

One radio frame, $T_s=307200T = 10ms$

One half-frame, $T_s=153600T = 5ms$

One slot,
$T_{slot}=15360T_s$

$30720T_s$

| Subframe#0 | | | | Subframe#2 | Subframe#3 | Subframe#4 | Subframe#5 | | | | Subframe#7 | Subframe#8 | Subframe#9 |

One subframe,
$30720T_s$

DwPTS    GP    UpPTS

DwPTS    GP    UpPTS

(b)

EP 2 999 139 B1

# FIG. 2

One downlink slot

7 OFDM symbols

$N^{DL} \times 12$ Sub-carriers

12 Sub-carriers

Resource block
12×7 resource elements

Resource element

# FIG. 3

# FIG. 4

# FIG. 5

( a ) Single CC

( b ) Multiple CC

EP 2 999 139 B1

# FIG. 6

# FIG. 7

# FIG. 8

Discovery
signal

Component
carrier #0

Component
carrier #1

Component
carrier #2

# FIG. 9

10 (eNB)

15

25

20 (UE)

12 — Transmission module

14 — Memory    13 — Processor

11 — Reception module

22 — Transmission module

23 — Processor    24 — Memory

21 — Reception module

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013114526 A1

- EP 2555579 A1